# EUROPEAN PATENT SPECIFICATION

(11) **EP 2 059 384 B1**
(45) Date of publication and mention of the grant of the patent: **03.07.2013**
(21) Application number: 07802833.9
(22) Date of filing: 23.08.2007
(51) Int. Cl.: B29D 11/00, B05D 7/24

(54) **METHOD OF COATING OF CONTACT LENSES**
VERFAHREN ZUR BESCHICHTUNG VON KONTAKTLINSEN
PROCÉDÉ DE REVÊTEMENT DES LENTILLES DE CONTACT

(30) Priority: 25.08.2006 EP 06254456
(43) Date of publication of application: 20.05.2009
(73) Proprietor: Surface Innovations Limited, Wolsingham, County Durham DL13 3HH (GB)
(72) Inventor: BROAD, Robert Andrew, Curdridge Hampshire SO32 2BD (GB); BADYAL, Jas Pal Singh, Wolsingham Durham DL13 3HH (GB)
(74) Representative: Greaves, Carol Pauline
(86) International application number: PCT/EP2007/058777
(87) International publication number: WO 2008/023048

(56) References cited:
- EP-A- 1 136 521
- JP-A- 2001 337 298
- US-B1- 6 465 056

## Description

This invention relates to a method of coating contact lenses to produce a wettable, biocompatible surface and to contact lenses having wettable, biocompatible surfaces.

Most contact lenses are formed using a polymerisation technique in which the entire lens has the same structure. Modern lenses commonly contain siloxanes in order to improve the oxygen permeability of the lenses. However, the inclusion of siloxanes has a detrimental effect on the wettability of the lens. One possible approach to overcoming this problem is to coat the contact lenses. It is important that such a coating is also biocompatible. However, there are problems associated with coating lenses which include repeatability of both polymer type and also coating thickness.

In order to substantially improve the oxygen permeability of hydrophilic contact lens formulations, a popular solution has been to add silicon and fluorine containing hydrophobic monomers in significant amounts. This can lead to detrimental effects on lens wettability and biocompatibility. Materials which exhibit high gas permeabilities by the incorporation of high levels of silicon or other strongly hydrophobic monomers designed to increase the oxygen permeability typically show very poor wetting characteristics. These poor wetting characteristics may lead to poor lens movement on eye, and in extreme cases can lead to lens adhesion to the eye. Poor wetting can also manifest itself by significantly increased *in vivo* spoiling due to adherence of lipid, protein and other biomolecules to the lens surface. It is well understood in the art that to make an efficacious contact lens including high levels of hydrophobic monomers in the formulation that these effects need to be circumvented. This may be achieved by surface modification of the lens to make the lens surface significantly more wettable.

For example, in order to make a relatively hydrophobic contact lens more hydrophilic, a contact lens can be treated with a gas plasma oxidation treatment. Such a process is disclosed in EP1080138 by Valint et al. Plasma oxidation of silicone containing surfaces, using, for example, oxygen gas, as disclosed in EP1080138 is difficult to control. Low level treatments may be incomplete and allow the bulk properties of the material to remain evident at the surface. Also, due to the high mobility of the silicone bonds the treated surface can re-orientate and therefore the plasma treated surfaces may be unstable. Furthermore, the process disclosed in EP1080138 produces a chemically and physically heterogeneous surface with silicate containing plates surrounded by fissures containing untreated material at the lens surface. This is compounded by the fact that lenses must be treated in a partial vacuum, therefore they must be treated in the dry state. Hydrophilic contact lenses swell when hydrated, which can lead to cracking or other defects appearing in the treated surface leading to a heterogeneous surface. Ideally a contact lens or other medical device would have a homogeneous surface.

An alternative approach is to use a gas plasma deposited film. Such a technique is described in detail by US4,312,575 (Peyman et al) and US4,632,844 ((Yanagihara et al). This process has the advantage that the deposited film is homogeneous, although the precise control of the chemical constituents of the surface is difficult. Gas plasma deposition, even using pulsed plasma techniques, may lead to significant molecular fragmentation of the deposited species, and control of the precise chemistry of the deposited material is consequently poor. The deposited species will be a mixture of species depending on the conditions used.

US 6,200,626 (Valint et al) discloses an alternative method of rendering silicone containing hydrophobic surfaces hydrophilic via a three step process. First, surfaces are treated to an oxidative plasma treatment; the oxidatively treated surface is then subjected to a plasma polymerisation reaction in a hydrocarbon atmosphere; and finally the surface is treated to a free radical graft polymerisation in solution. This process is complex and cumbersome for manufacturing high volume medical devices such as contact lenses, and control of such processes difficult.

US 6,465,056 also describes a process for coating articles including biomedical articles such as contact lenses.

The modification of solid surfaces by polymer attachment is a versatile and efficient means of controlling interfacial properties such as surface energy (i.e. wetting behaviour), permeability, bioactivity, and chemical reactivity. Benefits that may accrue to an article as a consequence of a polymer coating include, but are not limited to, chemical sensing ability, wear resistance, gas barrier, filtration, anti-reflective behaviour, controlled release, liquid or stain resistance, enhanced lubricity, adhesion, protein resistance, biocompatibility, the encouragement of cell growth and the ability to selectively bind biomolecules. Although some methods of coating polymers, and in particular medical devices such as contact lenses, are known, it would be useful if there were available a novel, substrate-independent method for producing such coatings.

The growth of polymer chains from surface bound initiator groups, the so-called "grafting from" method, is a long established means of producing densely functionalised, well-ordered, polymer coatings. Popularly practiced variants of this polymer coating paradigm include Atom Transfer Radical polymerisation (ATRP), Iniferter polymerisation, nitroxide mediated stable free-radical polymerisation (using compounds such as TEMPO), dithioester based reversible addition fragmentation chain transfer (RAFT), and surface-initiated radical polymerisation from immobilized azobisbutyronitrile type initiators. Such "grafting from" chemistries may be implemented in the gas phase, organic solvents, the aqueous phase, and in super-critical solvents as are known and described in the art.

Alternative "grafting to" techniques, where preformed polymer chains are bound to the substrate, by contrast, often yield comparatively poor grafting densities due to diffusional and steric limitations at the surface binding sites.

Traditional methods for preparing the immobilized initiator groups required by "grafting from" methods suffer from being complex, multi-step, and substrate specific. No genuinely universal means of rendering any article or surface amenable to a variety of "grafting from" techniques can be said to exist.

The present invention relates to the use of plasma polymerisation to deposit precursors for surface initiated polymerisation procedures. This method removes the dependence on substrate surface chemistry. In addition, it is able to provide a repeatable, stable coating on a medical device such as a contact lens.

Accordingly, in a first aspect of the present invention, there is provided a method of coating a contact lens comprising the steps of:
forming an initiator layer on the surface of the contact lens by plasma deposition of at least one initiator monomer; and
polymerising a propagation monomer onto the initiator layer to form a coating layer of a polymeric material on the contact lens.

In a second aspect of the present invention, there is provided a coated contact lens comprising a first coating layer of an initiator formed by plasma deposition and a second coating layer.

In a third aspect of the present invention, there is provided a method of coating a contact lens comprising the steps of:
forming an initiator layer on the surface of the contact lens by plasma deposition of at least one initiator monomer; and
polymerising a propagation monomer directly onto the initiator layer to form a coating layer of a polymeric material on the contact lens,
wherein the initiator monomer is a material capable of reacting directly with the propagation monomer.

The method of the invention is particularly suitable for use with contact lenses. In particular, the method may be used for lenses formed by polymerising hydrophilic monomers. One exemplary type of contact lens material is formed from the reaction of N,N-dimethyl methacrylamide (DMA), N-[tris-(trimethylsiloxy) silyl propyl] methacrylamide (TSMAA), tetraethylene glycol dimethacrylate (TEGDMA - a cross linking agent), 2,2-azobis isobutyronitrile (AZBN - a polymerisation initiator), and N-methyl pyrrolidone (NMP - a non-reactive diluent). Lenses are thermally cured in a nitrogen atmosphere. An example formulation is given in Table 1.

**Table 1**

| Monomer | wt % |
|---|---|
| DMA | 39.44 |
| TSMAA | 55.16 |
| TEGDMA | 0.20 |
| NMP | 4.80 |
| AZBN | 0.40 |

The method may be employed with any initiator monomers which are capable of being deposited on the surface of the medical device. Suitable initiator monomers are those that may directly initiate Atom Transfer Radical Polymerisation (ATRP) without further modification, initiators that form plasma polymers that, as a consequence of their structure and mode of deposition, possess stable radical functionalities (such as plasma polymerised maleic anhydride) which may be used to initiate directly the nitroxide-mediated living free-radical polymerisation of a variety of monomers (nitroxide mediators include tetramethylpiperidin-1-oxyl, TEMPO), or initiators that form a plasma polymer layer which requires further derivatisation before it can initiate polymer growth. Particularly preferred initiator monomers are 4-vinylbenzyl chloride, 2-bromoethylacrylate, allyl bromide, maleic anhydride, glycidylmethacrylate and allyl bromide.

The preferred propagation monomers used are zwitterionic monomers. Preferred zwitterionic monomers are those of the formula: 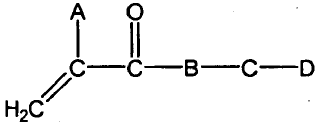 wherein
A is Hydrogen or methyl, preferably methyl;
B = Oxygen or NR¹ where R¹ is H, C₁₋₄ alkyl, or group C or D as defined below;
C = an alkylene group of the formula -(CR₂)ₐ-, wherein a = 1-12, preferably a = 1-6, and
R is independently Hydrogen, C₁₋₄ alkyl or C₁₋₄ fluoroalkyl, preferably Hydrogen,
wherein each CR₂ group can be the same or different;
D= a zwitterionic group

It is preferred that the zwitterionic monomer is a sulphobetaine. Particularly preferred are N-(3-Sulfopropyl)-N-methacroyloxyethyl- N,N-dimethylammonium betaine (SPE) 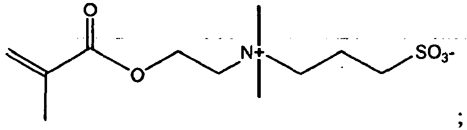 N,N-Dimethyl-N-(3-methacrylamidopropyl)-N-(3-sulfopropyl) ammonium betaine (SPP) 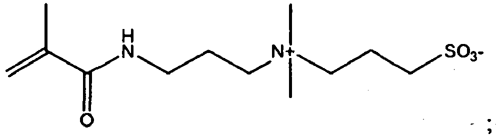 and
N,N-dimethyl-N-(2-acryloxyethyl)-N-(3-sulphopropyl)ammonium betaine (SPDA, manufactured by Raschig GMBH).

Another preferred zwitterionic monomer which may be utilised is 2-methacryloyloxyethyl phosphoryl choline (MPC). Other suitable zwitterionic monomers are compounds containing both a zwitterionic group and a group capable of co-polymerisation with acrylic or vinylic co-monomers via a free radical mechanism.

Other suitable monomers include, but are not limited to, hydroxyl-substituted lower alkyl acrylates and methacrylates, for example 2-hydroxyethyl methacrylate, (meth)acrylamide, (lower alkyl)acrylamides and -methacrylamides, for example N,N, dimethyl acrylamide, ethoxylated acrylates and methacrylates, hydroxyl-substituted (lower alkyl)acrylamides and -methacrylamides, hydroxyl-substituted lower alkyl vinyl ethers, sodium vinylsulfonate, sodium styrenesulfonate, N-vinylpyrrole, N-vinyl-2-pyrrolidone, 2-vinyloxazoline, 2-vinyl 4,4'-dialkyloxazolin-5-one, 2- and 4-vinylpyridine, vinylically unsaturated carboxylic acids having a total of 3 to 5 carbon atoms, for example methacrylic acid, amino(lower alkyl)- (where the term "amino" also includes quaternary ammonium), mono(lower alkylamino)(lower alkyl) and di(lower alkylamino)(lower alkyl) acrylates and methacrylates, allyl alcohol and the like. Preferably the hydrophilic monomers are N-vinyl-2-pyrrolidone, N,N-dimethyl methacrylamide, and hydroxyl substituted lower alkyl acrylates and methacrylates used either on their own or in any combination. In this application lower alkyl is understood to mean C1 to C5 alkyl.

In a particularly preferred embodiment of the invention, "grafting from" polymerisation can proceed directly from the deposited plasma polymer layer. Suitable plasma polymers for use in this aspect possess functional groups capable of acting as initiator sites for at least one "grafting from" procedure. For example, plasma polymers that possess transferable halogen moieties may directly initiate Atom Transfer Radical Polymerisation (ATRP) without further modification. In a further example, plasma polymers that, as a consequence of their structure and mode of deposition, possess stable radical functionalities (such as plasma polymerised maleic anhydride) may be used to initiate directly the nitroxide-mediated living free-radical polymerisation of a variety of monomers (nitroxide mediators include tetramethylpiperidin-1-oxyl, TEMPO).

In another aspect of the method, further derivatisation of the plasma polymer layer before surface "grafting from" is performed in order to realise benefits that include, but are not limited to, an enhanced rate of graft polymerisation.

It is known to use plasmas for the deposition of polymeric coatings onto a range of surfaces. The technique is recognised as being a clean, dry, energy and materials efficient alternative to standard wet chemical methods. Plasma polymers are typically generated by subjecting a coating-forming precursor to an ionising electric field under low-pressure conditions. However, atmospheric pressure and sub-atmospheric pressure plasmas are also known and utilised for this purpose in the art. Deposition occurs when excited species generated by the action of the electric field upon the precursor (radicals, ions, excited molecules etc.) polymerise in the gas phase and react with the substrate surface to form a growing polymer film.

It has been noted that the utility of plasma deposited coatings is often compromised by excessive fragmentation of the coating forming precursor during plasma processing. This problem has been addressed in the art by pulsing the applied electrical field in a sequence that yields a very low average power thus limiting monomer fragmentation and increasing the resemblance of the coating to its precursor (i.e. improving "monomer retention"). Examples of such sequences include those in which the plasma is on for 20 µs and off for from 1000 µs to 20000 µs. International Patent Application number WO9858117 (The Secretary of State for Defence, GB) describes such a process in which oil repellent coatings are produced by the pulsed plasma polymerisation ofperfluorinated acrylate monomers.

Precise conditions under which the plasma polymerization takes place in an effective manner will vary depending upon factors such as the nature of the polymer, the substrate etc. and can be determined using routine methods. In general however, polymerisation is suitably effected using vapours of compounds selected for their ability to initiate "grafting from" polymerisation, at pressures of from 0.01 to 10 mbar, most suitably at about 0.2 mbar.

A glow discharge is then ignited by applying a high frequency voltage, for example at 13.56MHz. The applied fields are suitably of average power of up to 50W. Suitable conditions include pulsed or continuous fields, but are preferably pulsed fields. The pulses are applied in a sequence which yields very low average powers, for example of less than 10W and preferably of less than I W. Examples of such sequences are those in which the power is on for 20 µs and off for periods from 1000 µs to 20000 µs. These fields are suitably applied for a period sufficient to give the desired coating. In general, this will be from 30 seconds to 60 minutes, preferably from 2 to 30 minutes, depending upon the nature of the plasma polymer precursor and the substrate etc.

According to a preferred embodiment there is provided a method of coating a medical device with a polymer layer from zwittenonic monomers grown using a "grafting from" procedure from surface immobilized initiator groups that have been prepared by, or via, plasma deposition. Particularly suitable plasma polymerised precursor layers are those that can be directly utilised as a source of immobilized initiator groups for the growth of the "grafted from" polymer layer.

An example is the direct growth of a sulphobetaine coating by Atom Transfer Radical Polymerisation (ATRP) from pulsed plasma polymer coatings of 4-vinylbenzyl chloride, 2-bromoethylacrylate or allyl bromide, with 2-bromoethylacrylate being most preferred.

A further example is the direct growth ofa sulphobetaine coating by nitroxide mediated stable free-radical polymerisation from plasma polymers possessing stable free radical functionality, such as pulse plasma deposited maleic anhydride.

In an alternative embodiment of the invention, the plasma polymer coating is further derivatised to form the specific immobilized-initiator groups required for subsequent participation within such "grafting from" polymerisation procedures as are known in the art. One example of said aspect of the method is the pulsed plasma polymerisation of 4-vinylbenzyl chloride or 2-bromoethylacrylate followed by derivatisation with sodium diethyldithiocarbamate. The dithiocarbamate groups produced by this derivatisation step are capable of initiating the production of coatings from zwitterionic monomers by photochemical surface Iniferter polymerisation. The use of plasmas to produce the immobilized initiator sites required for surface graft-polymerization renders a variety of "grafting from" coating techniques universally applicable to a vast range of surfaces and articles.

The prior art methods such as surface ATRP, surface Iniferter polymerisation, nitroxide mediated stable free-radical polymerisation, and surface polymerisation from immobilized azobisbutyronitrile type initiators uses techniques limited to a comparatively limited range of wet chemically-derivatised substrates such as gold coated with thiol Self Assembled Monolayers (SAMs), silicon coated with silane coupling agent SAMs, hydroxyl terminated resins derivatised with 2-bromoisobutylbromide, and cellulosic surfaces reacted with chloromethylphenyl functionalities.

Furthermore the amenability of plasma deposition techniques to spatial patterning (by means that include masking) confers an additional degree of regio-selective control to the subsequent "grafting from" coating procedures. Suitable plasmas for use in the method of the invention include continuous wave and pulsed nonequilibrium plasmas such as those generated by radiofrequencies, microwaves, audio-frequencies or direct current (DC). They may operate at atmospheric or sub-atmospheric pressures as are known in the art. The coating precursor may be introduced into the plasma as a vapour or an atomised spray of liquid droplets (WO03101621, Surface Innovations Limited). In a preferred aspect of the invention the plasma used to deposit the plasma polymer precursor to the "grafting from" procedure is a non-equilibrium radiofrequency (RF) glow discharge wherein the gas pressure may be 0.01 to 999 mbar and the applied average power is, for example, between 0.01 W and 10,000 W. Of especial utility for the method are low-pressure radiofrequency glow discharges, ignited at 13.56 MHz, which are operated at pressures between 0.01 and 10 mbar. The applied fields may be pulsed or continuous fields but are preferably pulsed fields. The pulses are preferably applied in a sequence that yields a very low average power. Examples of such sequences are those in which the plasma is on for 20 µs and off from 1000 µs to 20000 µs.

The plasma may comprise the plasma polymer coating precursor (commonly an organic monomeric compound) on its own. Suitable plasma polymer coating precursors preferably either have the capability to act directly as an initiator layer for a surface bound polymerisation technique (e.g. ATRP) or may be rendered into an initiator layer by a suitable derivatisation step (e.g. by reaction with sodium diethyldithiocarbamate or an azobisbutyronitrile type initiator).

In alternative embodiments of the invention, materials additional to the plasma polymer coating precursor are present within the plasma deposition apparatus. Said additive materials may be inert and act as buffers without any of their atomic structure being incorporated into the growing plasma polymer (suitable examples include the noble gases). A buffer of this type may be necessary to maintain a required process pressure. Alternatively the inert buffer may be required to sustain the plasma discharge. For example, the operation of atmospheric pressure glow discharge (APGD) plasmas often requires large quantities of helium. This helium diluent maintains the plasma by means of a Penning lonisation mechanism without becoming incorporated within the deposited coating.

In other embodiments of the invention, the additive materials possess the capability to modify and/or be incorporated into the coating forming material and/or the resultant plasma deposited coating. Suitable examples include reactive gases such as halogens, oxygen, and ammonia.

In a particularly preferred embodiment of the invention the deposited plasma polymer possesses a transferable halogen group suited to participation in the technique known in the art as Atom Transfer Radical Polymerisation (ATRP). In this case, surface initiated polymerisation may proceed directly upon the plasma polymer coating after the addition of a copper-based catalyst (e.g. Cu(I)(bpy)2Br) and the desired "grafting from" monomer.

In a specific example of this embodiment of the invention, the monomer for plasma polymerisation is 4-vinylbenzyl chloride. The resulting plasma deposited coating of poly(4-vinylbenzyl chloride) may then be used for the direct ATRP polymerisation of any monomers suited to this "grafting from" technique as are known in the art.
In an example of this "direct ATRP grafting" embodiment of the invention, the monomer utilised for plasma polymerisation is 2-bromoethylacrylate. The resulting plasma deposited coating ofpoly(2- bromoethylacrylate) may then be used for the direct ATRP polymerisation of any monomers suited to this "grafting from" technique as are known in the art.

In another specific example of the "direct ATRP grafting" aspect of the invention the monomer utilised for plasma polymerisation is allyl bromide. The resulting plasma deposited coating of poly(allyl bromide) may then be used for the direct ATRP polymerisation of any monomers suited to this "grafting from" technique as are known in the art.

In another particularly preferred embodiment of the invention the deposited plasma polymer possesses stable free-radical functionality suited to participation in free-radical based grafting techniques such as nitroxide mediated stable free-radical polymerisation, or dithioester based reversible addition fragmentation chain transfer (RAFT). In this case, surface initiated polymerisation may proceed directly upon the plasma polymer coating after the addition of a suitable mediating compound (e.g. tetramethylpiperidin-1-oxyl, TEMPO) and the desired "grafting from" monomer. In a specific example of this embodiment of the invention, the monomer for plasma polymerisation is maleic anhydride. The resulting plasma deposited coating of poly(maleic anhydride) may then, by virtue of its stable free radical functionality, be used for the direct nitroxide mediated or RAFT polymerisation of any monomers suited to these "grafting from" techniques as are known in the art.

However, if necessary derivatisation of a radical possessing plasma polymer film prior to graft polymerisation may be performed in order to yield benefits that include an enhanced rate of graft polymerisation. In an example of this further aspect of the invention, the plasma deposited coating of poly(maleic anhydride) is derivatised with an amine (such as allylamine or propylamine) before the commencement of graft polymerisation. Said amine derivatisation results in an enhanced rate of surface graft polymerisation.
In another aspect of the invention the plasma deposited coating requires further derivatisation before the application of the surface bound polymerisation technique (i.e. the "grafting from" stage). In a particular embodiment of this aspect of the invention the intermediate derivatisation step is performed using sodium diethyldithiocarbamate. The resultant dithiocarbamate functionatised plasma polymer is subsequently used as a source of surface-bound initiator for the Iniferter photopolymerisation of quasi-living polymer brushes of whichever monomers suited to this "grafting from" technique are known in the art.

In another embodiment of this aspect of the invention, the intermediate derivatisation step attaches an azobisbutyronitrile type initiator. A specific example of this methodology is the pulsed-plasma deposition of poly(glycidyl methacrylate) followed by derivatisation with 2,2'azobis(2-amidinopropane) hydrochloride to produce a surface capable of initiating surface free radical graft polymerisation.

In one embodiment of the present invention, a surface initiated polymerisation procedure ("grafting from") is undertaken subsequent to the deposition of a plasma polymerised layer. In some embodiments of the invention, this step may be undertaken directly after plasma polymer deposition, upon the addition of suitable monomer(s) and suitable catalytic or mediating compound(s). In other embodiments of the invention the plasma deposited coating is further derivatised before the application of the surface bound polymerisation technique (i.e. the "grafting from" stage).

More than one monomer may be grafted upon the plasma polymer coated substrate during the surface-initiated polymerisation step. The monomers may be polymerised simultaneously, or in the case of "living" / "quasi living" polymerisation techniques (which include, but are not limited to, ATRP, nitroxide mediated, and Iniferter polymerisation) applied in turn to produce block copolymers, polymer "bottle-brushes" and other polymer architectures as are known in the art. The method of the invention may result in a product wholly coated in surface-initiated ("grafted from") polymer coating. In an alternative aspect of the invention the surface-initiated ("grafted from") polymer coating is only applied to selected surface domains.

The restriction of the "grafting from" polymer coating to specific surface domains may be achieved by limiting the initial plasma deposition step of the method to said specific surface domains. In one embodiment of this aspect of the invention, the aforementioned spatial restriction is achieved by depositing the plasma coating through a mask or template.

The pattern produced by masking is subsequently transferred to the "grafted from" polymer coating. This produces a sample exhibiting regions covered with "grafted from" polymer juxtaposed with regions that exhibit no "grafted from" polymer. An alternative means of restricting the "grafting from" polymer coating procedure to specific surface domains comprises: depositing the plasma polymer precursor over the entire surface of the sample, before rendering selected areas of it incapable of initiating the "grafting from" step. The spatially selective removal / damage of the plasma deposited precursor may be achieved using numerous means as are described in the art. Suitable methods include, but are not limited to, electron beam etching and exposure to ultraviolet irradiation through a mask. The pattern of non-transmitting material possessed by the mask is hence transferred to areas of "grafted from" polymer growth.

Preferred embodiments of the invention will be further described with reference to the figures in which:
Figure 1 shows an RAIRS plot of the coated surface for set 1;
Figure 2 shows an RAIRS plot of the coated surface for set 2.

### Example 1

In the following Example, contact lenses were coated with a polymerised sulphobetaine (poly(N,N-dimethyl-N-(3-methacrylamidopropyl)-N-(3-sulfopropyl) ammonium betaine) (SPP)). Silicon wafer fragments and gold chips were also coated using the same process to provide additional information on the coating.

Soft hydrophilic contact lenses made using the formulation in Table 1 were coated with a thin, protein-resistant layer of poly(SPP) using an Atom Transfer Radical Polymerisation (ATRP) procedure initiated from a poly (bromoethylacrylate) (BEA) plasma polymer according to the method below.

The method comprised three steps, namely:
1) poly(BEA) plasma polymer deposition;
2) ATRP catalyst preparation; and
3) ATRP grafting of poly(SPP).

### 1) BEA Plasma Polymer Deposition

Bromoethylacrylate monomer was loaded into a resealable glass tube and purified using several freeze-pump-thaw cycles. Pulsed plasma polymerization was carried out in a cylindrical glass reactor (4.5 cm diameter, 460 cm³ volume, 2 x 10-3 Torr base pressure, 1.4 x 10-9 mols⁻¹ leak rate) surrounded by a copper coil (4 mm diameter, 10 turns, located 15 cm away from the precursor inlet) and enclosed in a Faraday cage. The chamber was evacuated using a 30 L min-1 rotary pump attached to a liquid nitrogen cold trap and the pressure monitored with a Pirani gauge. All fittings were grease-free. During pulsed plasma deposition the radiofrequency power supply (13.56 MHz) was triggered by a square wave signal generator with the resultant pulse shape monitored using an oscilloscope. The output impedance of the RF power supply was matched to the partially ionised gas load using an L-C matching network.

Prior to use, the apparatus was thoroughly cleaned by scrubbing with detergent, rinsing in propan-2-ol, and oven drying. At this stage the reactor was reassembled and evacuated to base pressure. Further cleaning comprised running a continuous wave air plasma at 0.2 Torr and 40 W for 20 minutes. Next, silicon wafer fragments, gold coated chips, and/or lenses (concave side upwards) were inserted into the centre of the reactor and the system re-evacuated to base pressure. A constant flow of BEA monomer vapour was then introduced into the chamber at a pressure of 0.17 Torr for 5 minutes prior to plasma ignition.

Optimum functional group retention at the surface was found to require 40 W continuous wave bursts lasting 30 µs (tₒₙ), interspersed by off-periods (t_{off}) of 10,000 µs. After 2 minutes of deposition, the RF generator was switched off and the precursor allowed to purge through the system for a further 5 minutes. The chamber was then re-evacuated to base pressure and vented to atmosphere. The lenses were then turned over (convex side upwards) and the procedure repeated.

Of course, it is possible to coat the convex surface of the lenses first, or even to coat both sides of the lens at the same time.

Surface characterisation at this stage, utilising X-ray Photoelectron Spectroscopy (XPS), Video Contact Angle (VCA) analysis, Spectrophotometry, and Surface Infra-red Spectroscopy (using a Reflection Absorption accessory, RAIRS), confirmed that each plasma treatment resulted in the successful deposition of an approximately 100 nm thick layer of poly(BEA) exhibiting a high level of retained monomer functionality.

### 2) ATRP Catalyst Preparation

Prior to the grafting of poly(SPP) onto the BEA plasma polymer coated lenses, an ATRP catalyst containing both copper (I) and copper (II) bromide was prepared. The manufacture of each batch of this catalyst (sufficient for approximately 5-10 lenses) comprised the following steps:
i) 2.184 ml ofN, N, N', N', N" pentamethyldiethylenetriamine (PMDETA) (99% purity, Aldrich) and 1.0 ml of methanol were pipetted into a resealable glass tube and further purified using repeated freeze-pump-thaw cycles.
ii) 0.5507 g of Cu(I)Br and 0.0857 g of Cu(II)Br₂ were added to the still frozen, degassed liquid and re-evacuated immediately to remove oxygen and prevent further oxidation.
iii) thawing of the mixture followed by sonication, still under vacuum, for two minutes.

The resultant dark-green copper catalyst complex was then stored in an oxygen-free nitrogen atmosphere; aliquots being removed as required for subsequent ATRP grafting.

### 3) ATRP Grafting

The grafting of a protein-resistant layer of poly(SPP) onto each, separate BEA plasma-polymer coated lens was undertaken by pipetting 2.5 ml of deionised water was pipetted into a resealable glass tube and degassed by multiple freeze-pump-thaw cycles. To this, whilst under vacuum, was added a 0.212 ml aliquot of the pre-prepared Cu(I)Br/Cu(II)Br₂ complex (which turned from a dark-green to a navy blue colour).

Meanwhile, inside another resealable glass-tube, 1.6442 g of SPP was added to a BEA plasma polymer coated lens and either a gold chip or a silicon wafer piece (depending on the means of surface characterisation to be employed) and the dry mixture carefully evacuated.

Next the mixture of water and the copper catalyst was poured onto the SPP monomer and plasma-polymer coated substrates, whilst still under vacuum. Surface grafting then proceeded upon dissolution of the reaction mixture (encouraged by initial gentle agitation) for two hours. After this period the ATRP reaction was halted by exposure to ambient air and the grafted upon substrates rinsed in a series of clean vials of deionised water. The coated lens was then stored in a further clean vial of water and the coated silicon wafer / gold chip dried and retained for analysis.

Surface characterisation, by a combination of X-ray Photoelectron Spectroscopy (XPS), Video Contact Angle (VCA) analysis, Spectrophotometry, and Surface Infra-red Spectroscopy (using a Reflection Absorption accessory, RAIRS), was then used to confirm that each silicon wafer / gold chip (and hence each lens), had been successfully grafted with a layer of poly(SPP) by the ATRP procedure. The validity of this assumption being periodically checked by direct XPS characterisation of spare poly(SPP) coated lenses.

Typically each grafted sample exhibited a fully-wettable surface with XPS surface atomic abundances closely corresponding to the theoretical values of poly(SPP): %C=632, %O=21.1, %N=10.5, and %S=5.3. Infra-red spectra displayed a mixture of bands originating from both the SPP monomer and the poly(BEA) initiator layer.

### Results

### Contact angles for coated contact lenses

Sessile drop (water in air) contact angles were measured using a Dataphysics OCA 15 contact angle analyzer with contact lens adaptor. Lenses were equilibrated and measured in bicarbonate buffered saline. Lens sets 1 and 2 were coated with sulphobetaine monomer using the process described above. Contact angles (sessile drop and captive bubble) were measured on the lenses post coating treatment.

These same lenses were then subjected to a rub test, in order to establish the immediate durability of the coating. Each lens was placed into the palm of a latex gloved hand, and HPLC grade water applied to the lens such that the lens was covered. The lens was then rubbed between the palm and a latex gloved finger for 30 seconds to simulate a cleaning cycle that the lens may be subjected to in use. The sessile drop measurements were then repeated on the lenses post rub treatment.

The results indicate that the wettable surface is durable to this test. No measurement was possible for the captive bubble method. It was not possible to get the air bubble to adhere to the lens surface for long enough for a measurement to_be taken.

The above exercise was repeated for two further lens sets 3 and 4 to test the set to set reproducibility of the coating process. These lenses were not subjected to the rub test.

The data indicates that the process is consistent within a set and from set to set. The results are shown in Table 2 and Table 3.

**Table 2**

| **Set #** | **test** | **number of lenses** | **average contact angle** | **standard deviation** |
|---|---|---|---|---|
| 1 (pre-rub) | sessile pre-rub | 3 | 23.3 | 7.1 |
| 2 (pre-rub) | sessile pre-rub | 3 | 15.3 | 3.9 |
| 1 (post-rub) | sessile post-rub | 3 | 21.3 | 5.5 |
| 2 (post-rub) | sessile post-rub | 3 | 14.7 | 7.6 |

**Table 3**

| **Set #** | **test** | **number of lenses** | **average contact angle** | **standard deviation** |
|---|---|---|---|---|
| 3 (pre-rub) | sessile pre-rub | 5 | 15.2 | 2.4 |
| 4 (pre-rub) | sessile pre-rub | 5 | 15.2 | 3.6 |

### Surface Analysis of Contact Lenses

The surface of the lenses were analysed using X-ray photoelectron spectroscopy using a VG ESCALAB II electron spectrometer equipped with an unmonochromated Mg K_{α1,2} X-ray source (1253.6 eV) and a concentric hemispherical analyser. Photo-emitted electrons were collected at a take-off angle of 30° from the substrate normal, with electron detection in the constant analyser energy mode (CAE, pass energy = 20 eV). Both lens sets 1 and 2 showed a surface analysis similar to the predicted results for poly(SPP). The results are shown in Table 4.

**Table 4**

| Set | % C | % O | % N | % S | % Si | % Br |
|---|---|---|---|---|---|---|
| Poly(SPP) | 63.2 | 21.1 | 10.5 | 5.3 | 0 | 0 |
| 1C | 64.1 | 21.0 | 6.6 | 3.1 | 3.5 | 1.8 |
| 1F | 64.8 | 20.8 | 6.0 | 2.9 | 3.3 | 2.1 |
| 2B | 65.2 | 21.0 | 7.1 | 3.5 | 2.8 | 0.5 |
| 2G | 64.5 | 20.7 | 8.1 | 3.8 | 2.5 | 0.3 |

### Surface Analysis of Gold Surfaces

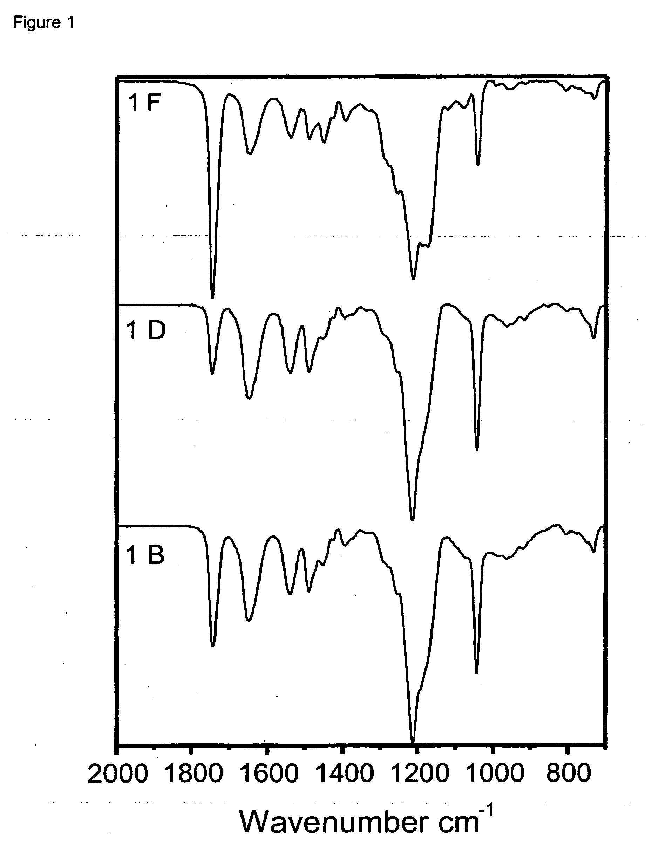

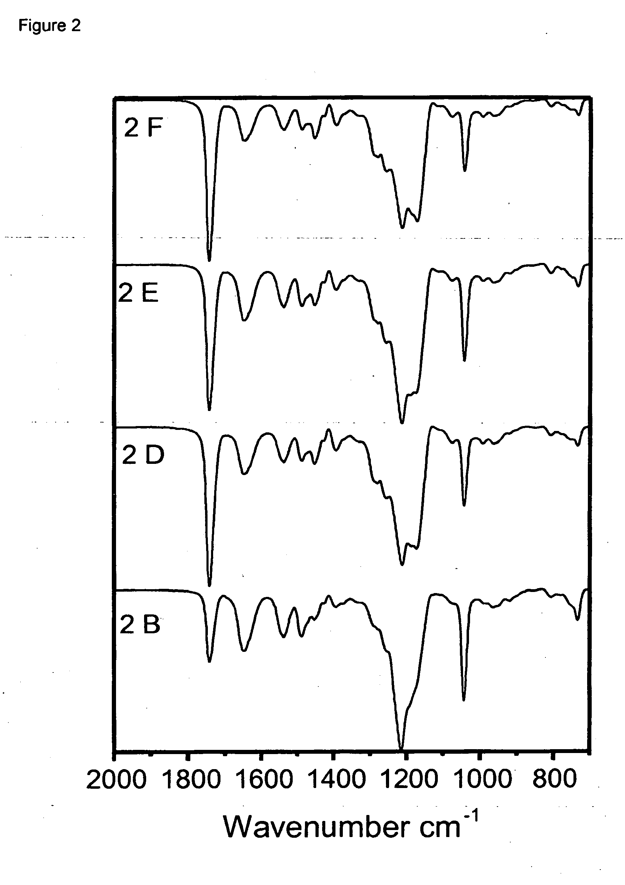

The coated gold surfaces were analysed by XPS as above and by reflection-adsorption infrared spectroscopy (RAIRS) using a Perkin Elmer Spectrum One FTIR spectrometer operating at 4 cm⁻¹ resolution over the 700-4000 cm⁻¹ range. The instrument was fitted with a liquid nitrogen cooled MCT detector and a reflection-absorption spectroscopy (RAIRS) accessory (Specac, KRS-5 p-polariser set to 66° reflection angle). The results confirm the presence of poly(SPP) grafted on top of the bromoethylacrylate plasma polymer initiator layer as shown in Table 5 and in Figures 1 and 2.

**Table 5**

| Set | %C | % O | % N | % S | % Si | % Br |
|---|---|---|---|---|---|---|
| Poly(SPP) | 63.2 | 21.1 | 10.5 | 5.3 | 0 | 0 |
| 1B | 66.9 | 21.2 | 7.1 | 3.7 | 0 | 1.1 |
| 1D | 65.5 | 20.2 | 9.4 | 4.6 | 0 | 0.3 |
| 1F | 66.6 | 24.4 | 5.6 | 3.1 | 0 | 0.4 |
| 2B | 65.1 | 20.2 | 9.2 | 4.6 | 0 | 0.9 |
| 2D | 65.6 | 20.4 | 7.9 | 4.2 | 0 | 1.9 |
| 2E | 65.2 | 21.9 | 6.4 | 3.5 | 0 | 3.1 |
| 2F | 66.2 | 19.7 | 8.6 | 4.5 | 0 | 1.0 |

Figures 1 and 2 demonstrate that the polymer layer is a poly(SPP) layer.

### Surface Analysis of Silicon Surface

The silicon surfaces were analysed by XPS as above and by reflectrometry using an NKD-6000 Spectrophotometer (from Aquila Instruments Limited) to measure the thickness of the coating. The results are shown in Table 5.

**Table 5**

| Set | % C | % O | % N | % S | % Si | % Br | Film Thickness (nm) |
|---|---|---|---|---|---|---|---|
| Poly(SPP) | 63.2 | 21.1 | 10.5 | 5.3 | 0 | 0 | - |
| 1C | 66.5 | 19.4 | 8.8 | 4.5 | 0 | 0.7 | 220 |
| 1E | 66.9 | 19.7 | 8.6 | 4.2 | 0 | 0.6 | 170-270 |
| 1G | 66.6 | 20.0 | 8.2 | 4.1 | 0 | 1.2 | 34 |
| 2A | 65.9 | 20.4 | 7.3 | 3.9 | 0 | 2.5 | 19 |
| 2C | 65.5 | 20.4 | 8.7 | 4.2 | 0 | 1.2 | 88 |
| 2E | 65.7 | 20.7 | 7.0 | 3.5 | 0 | 3.1 | 36 |

The above method produced coated contact lenses.

Other embodiments of the present invention would be apparent to the person skilled in the art.

## Claims

1. A method of coating a contact lens comprising the steps of:
forming an initiator layer on the surface of the contact lens by plasma deposition of at least one initiator monomer; and
polymerising a propagation monomer onto the initiator layer to form a coating layer of a polymeric material on the contact lens.

2. A method of coating a contact lens as claimed in claim 1, wherein the propagation monomer is a zwitterionic monomer.

3. A method of coating as claimed in any one of the preceding claims, comprising an additional step of derivatising the initiator layer prior to forming the coating layer.

4. A method of coating as claimed in claim 3, wherein the derivatisation is undertaken using sodium diethyldithiocarbamate or an azobisbutyronitrile initiator.

5. A method of coating as claimed in any one of claims 1 to 2, wherein the initiator monomer is a material capable of reacting directly with the propagation monomer; and
the propagation monomer is polymerised directly onto the initiator layer to form the coating layer of the polymeric material on the contact lens.

6. A method of coating as claimed in any one of claims 1 to 2. or claim 5, wherein the initiator layer possesses transferable halogen moieties or stable radical functionalities.

7. A method of coating claimed in any one of the preceding claims, wherein the propagation monomer is a sulphobetaine.

8. A method of coating as claimed in claim 7, wherein the propagation monomer is N-(3-Sulfopropyl)-N-methacroyloxyethyl- N ,N- dimethylammonium betaine, N,N-Dimethyl-N-(3 - methacrylamidopropyl)-N- (3-sulfopropyl) ammonium betaine or N,N-dimethyl-N-(2-acryloxyethyl)-N- (3 -sulphopropyl)ammonium betaine.

9. A method of coating as claimed in any one of the preceding claims, wherein a non-zwitterionic monomer is used in combination with the at least one zwitterionic monomer to form the polymer layer.

10. A method of coating as claimed in any one of the preceding claims, wherein the initiator layer is formed from plasma deposition of at least one of 4-vinylbenzyl chloride, 2-bromoethylacrylate, maleic anhydride, glycidylmethacrylate and allyl bromide.

11. A method of coating as claimed in any one of the preceding claims, wherein the coating layer is formed using a grafting from polymerisation process.

12. A method of coating as claimed in claim 11, wherein the coating layer is formed using surface atom transfer radical polymerisation, nitroxide mediated stable free-radical polymerisation, surface Iniferter polymerisation or surface polymerisation from immobilized azobisbutyronitrile type initiators.

13. A method of coating as claimed in any one of the preceding claims, wherein the initiator layer is formed by subjecting the initiator monomer to an ionising electric field under low pressure.

14. A method of coating as claimed in claim 13, wherein the electric field is pulsed.

15. A method of coating a contact lens according to claim 1; wherein the initiator monomer is a material capable of reacting directly with the propagation monomer, and the propagation monomer is polymerised directly onto the initiator layer.

16. A coated contact lens, coated by the method of claim 1 and comprising a first coating layer of an initiator formed by plasma deposition and a second coating layer.

17. A contact lens as claimed in claim 16, wherein the second coating polymer layer is the reaction product of monomers comprising zwitterionic monomers.

18. A contact lens as claimed in claim 17, wherein the zwitterionic monomers comprise a sulphobetaine.

## Patentansprüche

1. Verfahren zur Beschichtung einer Kontaktlinse, umfassend die Schritte:
Bilden einer Initiatorschicht auf der Oberfläche der Kontaktlinse durch Plasmaabscheidung mindestens eines Initiator-Monomers und
Polymerisieren eines Propagations-Monomers auf der Initiatorschicht, um eine Überzugsschicht aus einem Polymermaterial auf der Kontaktlinse zu bilden.

2. Verfahren zum Beschichten einer Kontaktlinse, wie in Anspruch 1 beansprucht, worin das Propagations-Monomer ein zwitterionisches Monomer ist.

3. Verfahren zur Beschichtung, wie in einem der vorhergehenden Ansprüche beansprucht, umfassend einen zusätzlichen Schritt der Derivatisierung der Initiatorschicht vor der Bildung der Überzugsschicht.

4. Verfahren zur Beschichtung nach Anspruch 3, worin die Derivatisierung unter Verwendung von Natriumdiethyldithiocarbamat oder eines Azobisbutyronitril-Initiators vorgenommen wird.

5. Verfahren zur Beschichtung, wie in einem der Ansprüche 1 bis 2 beansprucht, worin das Initiator-Monomer ein Material ist, das in der Lage ist, direkt mit dem Propagations-Monomer zu reagieren, und
das Propagations-Monomer direkt auf die Initiatorschicht polymerisiert wird, um die Überzugsschicht des Polymermaterials auf der Kontaktlinse zu bilden.

6. Verfahren zur Beschichtung, wie in einem der Ansprüche 1 bis 2 oder Anspruch 5 beansprucht, worin die Initiatorschicht übertragbare Halogeneinheiten oder stabile Radikal-Funktionalitäten besitzt.

7. Verfahren zur Beschichtung, wie in einem der vorhergehenden Ansprüche beansprucht, worin das Propagations-Monomer ein Sulfobetain ist.

8. Verfahren zur Beschichtung, wie in Anspruch 7 beansprucht, worin das Propagations-Monomer N-(3-Sulfopropyl)-N-methacroyloxyethyl-N, N-dimethylammoniumbetain, N,N-Dimethyl-N-(3-methacrylamidopropyl)-N-(3-sulfopropyl)-ammoniumbetain oder N,N-Dimethyl-N-(2-acryloxyethyl)-N-(3-sulfopropyl)-ammoniumbetain ist.

9. Verfahren zur Beschichtung, wie in einem der vorhergehenden Ansprüche beansprucht, worin ein nicht-zwitterionisches Monomer in Kombination mit dem mindestens einen zwitterionischen Monomer verwendet wird, um die Polymerschicht zu bilden.

10. Verfahren zur Beschichtung, wie in einem der vorhergehenden Ansprüche beansprucht, worin die Initiatorschicht durch Plasmaabscheidung wenigstens eines von 4-Vinylbenzylchlorid, 2-Bromethylacrylat, Maleinsäureanhydrid, Glycidylmethacrylat und Allylbromid gebildet wird.

11. Verfahren zur Beschichtung, wie in einem der vorhergehenden Ansprüche beansprucht, worin die Überzugsschicht gebildet wird durch ein Grafting von Polymerisationsverfahren.

12. Verfahren zum Beschichten nach Anspruch 10, worin die Überzugsschicht gebildet wird unter Verwendung von Oberflächen-Atomtransfer-Radikalpolymerisation, Nitroxid-vermittelter stabile freie Radikalpolymerisation, Oberflächen-Iniferter-Polymerisation oder Oberflächen-Polymerisation von immobilisierten Azobisbutyronitril-Typ-Initiatoren.

13. Verfahren zur Beschichtung nach einem der vorhergehenden Ansprüche, worin die Initiatorschicht gebildet wird, indem das Initiator-Monomer einem ionisierenden elektrischen Feld unter niedrigem Druck ausgesetzt wird.

14. Verfahren zum Beschichten nach Anspruch 13, worin das elektrische Feld gepulst ist.

15. Verfahren zur Beschichtung einer Kontaktlinse nach Anspruch 1, worin das Initiator-Monomer ein Material ist, das in der Lage ist, direkt mit dem Propagations-Monomer zu reagieren, und das Propagations-Monomer direkt auf die Initiatorschicht polymerisiert wird.

16. Mit dem Verfahren nach Anspruch 1 beschichtete Kontaktlinse, umfassend eine erste, aus einem Initiator bestehende Überzugsschicht, die durch Plasmaabscheidung gebildet ist, und eine zweite Überzugsschicht.

17. Kontaktlinse, wie in Anspruch 16 beansprucht, worin die zweite Überzugsschicht das Reaktionsprodukt von zwitterionische Monomere umfassenden Monomeren ist.

18. Kontaktlinse, wie in Anspruch 17 beansprucht, worin die zwitterionischen Monomere ein Sulfobetain umfassen.

## Revendications

1. Méthode de revêtement d'une lentille de contact comprenant les étapes de :
formation d'une couche d'initiateur sur la surface de la lentille de contact par dépôt par plasma d'au moins un monomère initiateur ; et
polymérisation d'un monomère de propagation sur la couche d'initiateur afin de former une couche de revêtement d'un matériau polymérique sur la lentille de contact.

2. Méthode de revêtement d'une lentille de contact selon la revendication 1, dans laquelle le monomère de propagation est un monomère zwittérionique.

3. Méthode de revêtement selon l'une quelconque des revendications précédentes, comprenant une étape supplémentaire de dérivation de la couche d'initiateur avant la formation de la couche de revêtement.

4. Méthode de revêtement selon la revendication 3, dans laquelle la dérivation est entreprise en utilisant du diéthyldithiocarbamate de sodium ou un initiateur azobisbutyronitrile.

5. Méthode de revêtement selon l'une quelconque des revendications 1 à 2, dans laquelle le monomère initiateur est un matériau capable de réagir directement avec le monomère de propagation ; et
le monomère de propagation est polymérisé directement sur la couche d'initiateur afin de former la couche de revêtement du matériau polymérique sur la lentille de contact.

6. Méthode de revêtement selon l'une quelconque des revendications 1 à 2 ou la revendication 5, dans laquelle la couche d'initiateur possède des fragments halogénés transférables ou des fonctionnalités radicalaires stables.

7. Méthode de revêtement selon l'une quelconque des revendications précédentes, dans laquelle le monomère de propagation est une sulfobétaïne.

8. Méthode de revêtement selon la revendication 7, dans laquelle le monomère de propagation est la N-(3-sulfopropyl)-N-méthacroyloxyéthyl-N,N-diméthylammonium bétaïne, la N,N-diméthyl-N-(3-méthacrylamidopropyl)-N-(3-sulfopropyl)ammonium bétaïne ou la N,N-diméthyl-N-(2-acryloxyéthyl)-N-(3-sulfopropyl)ammonium bétaïne.

9. Méthode de revêtement selon l'une quelconque des revendications précédentes, dans laquelle un monomère non zwittérionique est utilisé en combinaison avec l'au moins un monomère zwittérionique afin de former la couche de polymère.

10. Méthode de revêtement selon l'une quelconque des revendications précédentes, dans laquelle la couche d'initiateur est formée par dépôt par plasma d'au moins un élément parmi le chlorure de 4-vinylbenzyle, l'acrylate de 2-bromoéthyle, l'anhydride maléique, le méthacrylate de glycidyle et le bromure d'allyle.

11. Méthode de revêtement selon l'une quelconque des revendications précédentes, dans laquelle la couche de revêtement est formée en utilisant un greffage issu d'un procédé de polymérisation.

12. Méthode de revêtement selon la revendication 11, dans laquelle la couche de revêtement est formée en utilisant une polymérisation radicalaire par transfert d'atomes de surface, une polymérisation radicalaire stable contrôlée par des nitroxydes, une polymérisation d'Iniferter de surface, ou une polymérisation de surface à partir d'initiateurs de type azobisbutyronitrile immobilisés.

13. Méthode de revêtement selon l'une quelconque des revendications précédentes, dans laquelle la couche d'initiateur est formée en soumettant le monomère initiateur à un champ électrique ionisant à basse pression.

14. Méthode de revêtement selon la revendication 13, dans laquelle le champ électrique est pulsé.

15. Méthode de revêtement d'une lentille de contact selon la revendication 1, dans laquelle le monomère initiateur est un matériau capable de réagir directement avec le monomère de propagation, et le monomère de propagation est polymérisé directement sur la couche d'initiateur.

16. Lentille de contact revêtue par la méthode de la revendication 1 et comprenant une première couche de revêtement d'un initiateur formé par dépôt par plasma et une deuxième couche de revêtement.

17. Lentille de contact selon la revendication 16, dans laquelle la deuxième couche polymère de revêtement est le produit de réaction de monomères comprenant des monomères zwittérioniques.

18. Lentille de contact selon la revendication 17, dans laquelle les monomères zwittérioniques comprennent une sulfobétaïne.
